# EUROPÄISCHE PATENTSCHRIFT

(11) **EP 2 838 778 B1**
(45) Veröffentlichungstag und Bekanntmachung des Hinweises auf die Patenterteilung: **25.10.2017**
(21) Anmeldenummer: 13717238.3
(22) Anmeldetag: 10.04.2013
(51) Int. Cl.: B62D 15/02, B62D 59/04

(54) **FERNGESTEUERTES RANGIEREN EINES KRAFTFAHRZEUGS MITHILFE EINES TRAGBAREN KOMMUNIKATIONSGERÄTS**
REMOTE-CONTROLLED MANEUVERING OF A MOTOR VEHICLE USING A PORTABLE COMMUNICATION DEVICE
MAN UVRE DE STATIONNEMENT D'UN VÉHICULE AUTOMOBILE COMMANDÉE À DISTANCE AU MOYEN D'UN APPAREIL DE COMMUNICATION PORTABLE

(30) Priorität: 20.04.2012 DE 102012007986
(43) Veröffentlichungstag der Anmeldung: 25.02.2015
(73) Patentinhaber: Valeo Schalter und Sensoren GmbH, 74321 Bietigheim-Bissingen (DE)
(72) Erfinder: JECKER, Nicolas, 73730 Esslingen (DE); GRIMM, Oliver, 74223 Flein (DE); VOVKUSHEVSKY, Vsevolod, 74321 Bietigheim-Bissingen (DE)
(86) Internationale Anmeldenummer: PCT/EP2013/057450
(87) Internationale Veröffentlichungsnummer: WO 2013/156361

(56) Entgegenhaltungen:
- EP-A2- 1 826 107
- DE-A1-102008 051 982
- DE-U1-202009 005 524
- JP-A- 2006 069 534
- JP-A- 2006 302 187

## Beschreibung

Die Erfindung betrifft ein Rangiersystem zum automatisierten Rangieren eines Kraftfahrzeugs. Das Rangiersystem umfasst eine fahrzeugseitige Steuereinrichtung, welche dazu ausgelegt ist, Steuersignale an eine Antriebs- und/oder Lenkvorrichtung des Kraftfahrzeugs abzugeben und hierdurch einen Rangiervorgang des Kraftfahrzeugs selbsttätig durchzuführen. Das Rangiersystem umfasst auch ein durch einen Benutzerinsbesondere den Fahrer des Kraftfahrzeugs - bedienbares tragbares Kommunikationsgerät, welches mit der fahrzeugseitigen Steuereinrichtung drahtlos kommuniziert und hierbei den automatischen Rangiervorgang in Abhängigkeit von einer Eingabe des Benutzers an einer Bedieneinrichtung des tragbaren Kommunikationsgeräts freigeben und/oder unterbrechen kann. Die Erfindung betrifft außerdem ein Kraftfahrzeug mit einem derartigen Rangiersystem, ein tragbares Kommunikationsgerät, wie auch ein Verfahren zum automatischen Rangieren eines Kraftfahrzeugs.

Das Interesse richtet sich vorliegend insbesondere auf ein automatisches Parkassistenzsystem, welches zum autonomen bzw. selbsttätigen Einparken eines Kraftfahrzeugs in eine Parklücke ausgebildet ist. Solche Parkassistenzsysteme sind bereits Stand der Technik. Ein derartiges System ist beispielsweise aus der Druckschrift DE 198 17 142 B4 bekannt. Das Parkassistenzsystem kann hier den Parkvorgang des Kraftfahrzeugs selbsttätig durchführen, ohne dass der Fahrer lenken oder Gas geben muss. Das Parkassistenzsystem erfasst zunächst mithilfe von Ultraschallsensoren eine in der Umgebung des Kraftfahrzeugs vorhandene Parklücke, welche zum Einparken des Kraftfahrzeugs geeignet ist bzw. entsprechende Abmessungen sowohl in Längsrichtung als auch in Querrichtung des Kraftfahrzeugs besitzt. Dann bestimmt das Parkassistenzsystem die relative Position des Kraftfahrzeugs bezüglich der Parklücke, und es wird anschließend eine Parkbahn berechnet, entlang welcher das Kraftfahrzeug in eine Endposition in der Parklücke eingeparkt werden kann. Der Fahrer braucht hier lediglich den automatischen Parkvorgang freizugeben; dies kann er mithilfe einer Bedieneinrichtung tun und hat außerdem auch die Möglichkeit, den autonomen Parkvorgang zu unterbrechen. Zu diesem Zwecke ist außerdem eine Fernbedienung bereitgestellt, die zum Beispiel auch in Form eines Fahrzeugschlüssels ausgebildet ist.

Aus der DE 10 2009 041 587 A1 ist eine Fahrerassistenzeinrichtung für ein Kraftfahrzeug bekannt, welche zum Durchführen eines automatischen Parkvorgangs ausgebildet ist. Es ist auch eine Fernbedienung bereitgestellt, welche in einen Fahrzeugschlüssel integriert ist oder aber in Form eines Mobiltelefons ausgebildet sein kann. Mithilfe der Fernbedienung kann der automatische Parkvorgang eingeleitet und dann auch gegebenenfalls abgebrochen werden. An dem Kraftfahrzeug sind außerdem eine Vielzahl von Kameras angeordnet, die die Umgebung um das Kraftfahrzeug herum erfassen. Die aufgenommenen Bilder können auch auf die Fernbedienung übertragen werden, und die Fernbedienung weist ein Display auf, auf welchem die aufgenommenen Bilder oder daraus berechnete Bilder dargestellt werden können. Es ist somit möglich, mithilfe der dargestellten Bilder den automatischen Parkvorgang zu überwachen, weil der Fahrer alle relevanten Informationen auf dem Display der Fernbedienung angezeigt bekommt.

In DE 10 2008 051 982 A1 ist ein Verfahren zu einem ferngesteuerten Rangieren eines Fahrzeugs mittels einer Fernsteuervorrichtung, sowie eine Fernsteuervorrichtung zur Durchführung des Verfahrens offenbart. Die Fernsteuervorrichtung umfasst ein Gehäuse mit zumindest einem Bedienelement, sowie Kommunikationsmittel für eine Kommunikation mit dem Fahrzeug. In einem ersten Bedienschritt wird eine Wegfahrsperre deaktiviert und ein Motor gestartet. In einem zweiten Schritt wird das Fahrzeug mittels einer Bedienbremse gebremst, eine Parkbremse gelöst und in einem, Automatikgetriebe eine Vorwärts- oder Rückwärtsfahrstufe eingelegt. In einem dritten Bedienschritt wird eine Geschwindigkeit des Fahrzeugs mittels der Betriebsbremse geregelt. Der nächstliegende Stand der Technik ist in der DE 10 2008 051 982 A1 zu sehnen. Es ist also bereits Stand der Technik, zur Steuerung des automatischen Parkvorgangs eines Kraftfahrzeugs ein Mobiltelefon einzusetzen, etwa ein Smartphone, wie es heutzutage in vielfältiger Ausgestaltung auf dem Markt erhältlich ist. Dabei ist es bereits bekannt, das automatische Rangieren des Kraftfahrzeugs nur so lange zuzulassen, während der Benutzer ein Betätigungselement - etwa eine Schaltfläche auf einem berührungssensitiven Display - betätigt hält, und nach Freigeben dieses Betätigungselements das Kraftfahrzeug umgehend anzuhalten. Zu diesem Zwecke kann auf dem Mobiltelefon eine spezielle Applikation bzw. ein Programm installiert werden, welche bzw. welches derart gestaltet wird, dass die Sicherheitsanforderungen erfüllt sind, nämlich dass das Kraftfahrzeug nur bewegt wird, solange der Benutzer ein entsprechendes Betätigungselement betätigt hält, und automatisch angehalten wird, wenn der Benutzer dieses Betätigungselement freigibt bzw. loslässt. Somit kann der Fahrer den automatischen Parkvorgang besonders schnell unterbrechen, nämlich durch einfaches Loslassen des Betätigungselements. Eine besondere Herausforderung besteht nun darin, dem Benutzer bzw. dem Fahrer alle relevanten Informationen über den Parkvorgang zu vermitteln, damit der Fahrer auch zuverlässig darüber entscheiden kann, ob der Parkvorgang unterbrochen werden soll oder nicht. Zwar sind diesbezüglich bereits Systeme bekannt, welche das Kraftfahrzeug nach Erkennen eine Hindernisses automatisch abbremsen können, jedoch weiß der Fahrer oft nicht, aus welchem Grund sein Kraftfahrzeug angehalten wurde und wo sich das Hindernis auch tatsächlich befindet. Die aus dem Stand der Technik bereits bekannte Vorgehensweise, auf einem

Display des Mobiltelefons Bilder des Umgebungsbereichs des Kraftfahrzeugs anzuzeigen, schafft diesbezüglich eine gewisse Abhilfe, erweist sich jedoch in der Regel hauptsächlich bei guten Lichtverhältnissen als vorteilhaft.

Es ist Aufgabe der Erfindung, eine Lösung aufzuzeigen, ein besonders sicheres automatisiertes Rangieren eines Kraftfahrzeugs mithilfe eines tragbaren Kommunikationsgeräts zu ermöglichen.

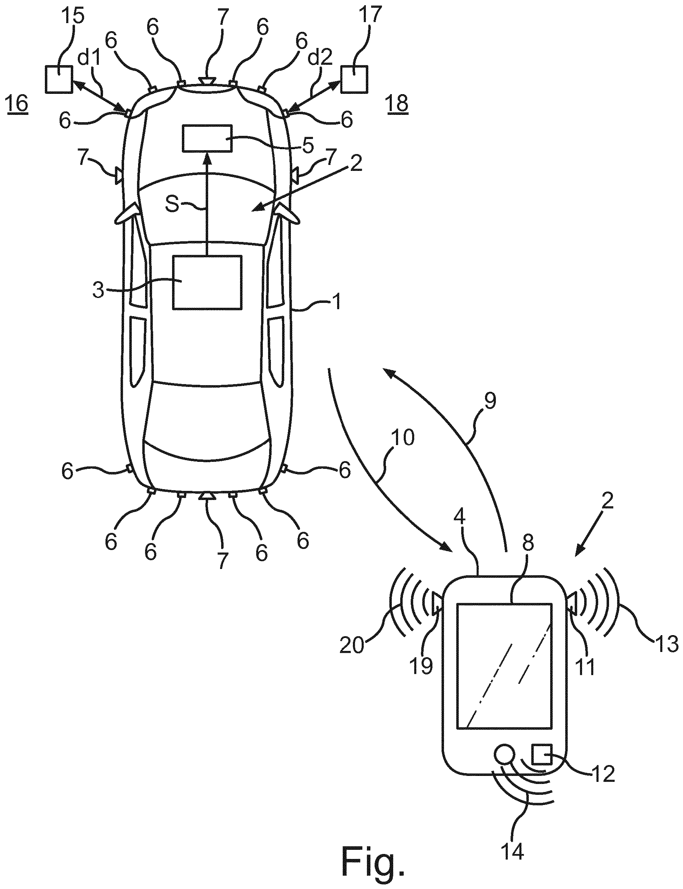

Diese Aufgabe wird erfindungsgemäß durch ein Rangiersystem, durch ein Kraftfahrzeug, durch ein tragbares Kommunikationsgerät sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Ein erfindungsgemäßes Rangiersystem ist zum automatisierten Rangieren - insbesondere zum automatischen Einparken - eines Kraftfahrzeugs ausgebildet. Das Rangiersystem umfasst einerseits eine fahrzeugseitige Steuereinrichtung sowie andererseits ein tragbares Kommunikationsgerät, welches durch einen Benutzerinsbesondere den Fahrer - bedient wird. Die Steuereinrichtung gibt Steuersignale an eine Antriebs- und/oder Lenkvorrichtung des Kraftfahrzeugs ab und führt somit einen Rangiervorgang des Kraftfahrzeugs selbsttätig durch. Das tragbare Kommunikationsgerät kommuniziert mit der fahrzeugseitigen Steuereinrichtung drahtlos und gibt hierbei den Rangiervorgang frei und/oder unterbricht ihn, nämlich abhängig von einer Eingabe des Benutzers an einer Bedieneinrichtung des tragbaren Kommunikationsgeräts. Bei dem tragbaren Kommunikationsgerät handelt es sich folglich um eine mobile Fernbedienung, mittels welcher der Fahrer den automatischen Rangiervorgang freigibt und/oder unterbricht. Die fahrzeugseitige Steuereinrichtung überträgt im Rahmen der drahtlosen Kommunikation Nachrichten bezüglich des Rangiervorgangs an das tragbare Kommunikationsgerät. Das tragbare Kommunikationsgerät empfängt die Nachrichten und gibt in Abhängigkeit von diesen Nachrichten ein akustisches Informationssignal mit Informationen über den Rangiervorgang und/oder ein haptisches Informationssignal mit Informationen über den Rangiervorgang aus, nämlich mithilfe eines Lautsprechers respektive einer Haptikeinrichtung.

Das Rangiersystem umfasst eine fahrzeugseitige Sensoreinrichtung, welche zum Erfassen eines Abstands zwischen dem Kraftfahrzeug einerseits und einem in einem Umgebungsbereich des Kraftfahrzeugs befindlichen Hindernis andererseits ausgebildet ist. Die Steuereinrichtung ist dazu ausgelegt, die Nachrichten für das tragbare Kommunikationsgerät auf der Grundlage bzw. in Abhängigkeit von dem erfassten Abstand zu erzeugen, und das von dem tragbaren Kommunikationsgerät ausgegebene Informationssignal ist ein von dem Abstand abhängiges Signal. Die Sensoreinrichtung des Kraftfahrzeugs kann gleichzeitig auch mehrere Hindernisse erfassen und die jeweiligen Abstände zwischen dem Kraftfahrzeug und den jeweiligen Hindernissen messen. Es ist vorgesehen, dass die Sensoreinrichtung zu zumindest zwei unterschiedlichen Umgebungsbereichen des Kraftfahrzeugs jeweilige Abstände zwischen dem Kraftfahrzeug und in den jeweiligen Umgebungsbereichen befindlichen Hindernissen erfasst. Beispielsweise kann die Sensoreinrichtung eine Vielzahl von Sensoren - insbesondere Ultraschallsensoren - aufweisen, welche jeweils einen unterschiedlichen Umgebungsbereich des Kraftfahrzeugs abdecken. Das tragbare Kommunikationsgerät gibt dann für die zumindest zwei unterschiedlichen Umgebungsbereiche des Kraftfahrzeugs jeweils verschiedene - insbesondere jeweils verschiedene Frequenzen (Signalhöhe) aufweisende - Informationssignale aus. Es ist vorgesehen, dass für die zumindest zwei unterschiedlichen Umgebungsbereiche des Kraftfahrzeugs das tragbare Kommunikationsgerät jeweils verschiedene Informationssignale gleicher Art, also jeweils verschiedene akustische Informationssignale und/oder jeweils verschiedene haptische Informationssignale, ausgeben wird. Der erfindungsgemäße Effekt wird also dadurch erzielt, dass ein tragbares Kommunikationsgerät - etwa ein Smartphone oder ein Fahrzeugschlüssel - als Der erfindungsgemäße Effekt wird also dadurch erzielt, dass ein tragbares Kommunikationsgerät - etwa ein Smartphone oder ein Fahrzeugschlüssel - als Bediengerät zum Steuern des automatischen Rangiervorgangs genutzt wird, welches hierfür mit einer spezifischen Bedienapplikation ausgerüstet wird und welches - beispielsweise über eine WLAN-Datenverbindung und/oder eine Bluetooth-Datenverbindung - drahtlos mit der fahrzeugseitigen Steuereinrichtung kommuniziert, und dass die genannte Bedienapplikation derart gestaltet wird, dass das tragbare Kommunikationsgerät Nachrichten (also Daten) bezüglich des Rangiervorgangs des Kraftfahrzeugs von der fahrzeugseitigen Steuereinrichtung empfangen kann und in Abhängigkeit von diesen empfangenen Nachrichten seinen Lautsprecher und/oder seine Haptikeinrichtung ansteuern kann, um ein akustisches und/oder haptisches Informationssignal mit Informationen über den automatischen Rangiervorgang auszugeben. Auf diese Weise wird ein besonders sicheres Rangieren des Kraftfahrzeugs ermöglicht. Alle sicherheitsrelevanten Informationen bezüglich des Rangiervorgangs können nämlich an das tragbare Kommunikationsgerät übertragen und dort akustisch und/oder haptisch ausgegeben werden, sodass der Benutzer über die gegebenenfalls vorhandenen Gefahren durch das tragbare Kommunikationsgerät informiert wird. Beispielsweise kann der Benutzer mithilfe des akustischen und/oder haptischen Informationssignals über Abstände informiert werden, welche mithilfe einer Sensoreinrichtung des Kraftfahrzeugs zwischen dem Kraftfahrzeug einerseits und den in seiner Umgebung befindlichen Hindernissen andererseits gemessen werden. Somit kann der Benutzer besonders gut und auch unabhängig von den herrschenden Lichtverhältnissen einschätzen, ob oder ob nicht er gegebenenfalls den automatischen Rangiervorgang unterbrechen soll.

Prinzipiell kann das tragbare Kommunikationsgerät eine beliebige Fernbedienung sein, etwa ein Fahrzeugschlüssel oder aber ein anderes Kommunikationsgerät. Es erweist sich jedoch als besonders vorteilhaft, wenn das tragbare Kommunikationsgerät als Mobiltelefon - etwa Smartphone - ausgebildet ist. Die bekannten Mobiltelefone verfügen nämlich über ausreichende Rechenressourcen, sodass neue Applikationen bzw. Computerprogramme problemlos installiert werden können, welche die Funktionsweise des erfindungsgemäßen Rangiersystems ermöglichen. Zum Bedienen des Rangiersystems kann somit ein in der Regel ohnehin vorhandenes Mobiltelefon genutzt werden, sodass sich der Einsatz von zusätzlichen Komponenten mit den damit verbundenen Nachteilen hinsichtlich Kosten erübrigt. Außerdem verfügen die bekannten Mobiltelefone heutzutage in der Regel über so genannte berührungssensitive Displays (Touch Displays), welche im Hinblick auf die Bedienung des Rangiersystems beliebig mit Haptikeinrichtung (etwa einen Aktuator bzw. Vibrator), sodass die wichtigsten Informationen dem Fahrer auf akustischem und/oder auf haptischem Wege vermittelt werden können.

Die Funktionalität der Fernsteuerung des automatischen Rangiervorgangs kann durch Installieren einer speziell zu diesem Zwecke entwickelten Applikation bzw. eines Computerprogramms auf dem tragbaren Kommunikationsgerät bereitgestellt werden. Ein solches Computerprogramm kann auf einem Datenträger bereits mit dem Kraftfahrzeug geliefert und/oder auf einem Internet-Server bereitgestellt und zum Download zur Verfügung gestellt werden. Es kann vorgesehen sein, dass das Kommunikationsgerät an das Kraftfahrzeug angemeldet werden muss, bevor die Fernsteuerung möglich ist. Hierzu kann ein dem Fahrzeug zugeordneter, nicht öffentlicher Code einmalig in der Applikation eingegeben werden, zum Beispiel eine in der Betriebsanleitung des Kraftfahrzeugs enthaltene Geheimzahl oder dergleichen. Erst danach ist die Kommunikation zwischen dem tragbaren Kommunikationsgerät und der fahrzeugseitigen Steuereinrichtung frei geschaltet. Damit wird verhindert, dass unbefugte Dritte das Kraftfahrzeug kontrollieren können.

Bevorzugt ist das Rangiersystem ein Parkassistenzsystem, welches zum autonomen Einparken des Kraftfahrzeugs in eine Parklücke bzw. zum Durchführen von automatischen Parkvorgängen als Rangiervorgängen ausgebildet ist. Ein derartiges Parkassistenzsystem kann eine Sensoreinrichtung aufweisen, welche beispielsweise eine Vielzahl von an den Stoßfängern angebrachten Ultraschallsensoren aufweist. Das Parkhilfesystem kann anhand von Sensordaten der Sensoreinrichtung eine geeignete Parklücke erkennen und in Abhängigkeit von einer aktuellen relativen Position des Kraftfahrzeugs bezüglich der Parklücke eine Parkbahn berechnen, entlang welcher das Kraftfahrzeug in eine Endposition in der Parklücke bewegt werden kann. Das Parkassistenzsystem betätigt automatisch die Antriebs- und/oder Lenkvorrichtung des Kraftfahrzeugs, um das Kraftfahrzeug in die Parklücke zu bewegen, nämlich gemäß der berechneten Parkbahn. Der Fahrer braucht hier lediglich den automatischen Parkvorgang freizugeben und kann gegebenenfalls diesen Parkvorgang jederzeit unterbrechen.

Insbesondere ist dabei die Wiederholfrequenz bzw. Wiederholrate des Informationssignals - nämlich des akustischen Informationssignals und/oder des haptischen Informationssignals - abhängig von dem gemessenen Abstand zwischen dem Kraftfahrzeug und dem Hindernis. Die durch das tragbare Kommunikationsgerät ausgegebenen (in dem Informationssignal enthaltenen) Informationen beinhalten somit eine Information über den gemessenen Abstand, sodass der Fahrer bzw. der Benutzer auf haptischem und/oder auf akustischem Wege über den tatsächlichen Abstand zum Hindernis informiert werden kann. Ähnlich wie bei einer herkömmlichen Einparkhilfe eines Kraftfahrzeugs kann dies so aussehen, dass ein akustisches Informationssignal in Form eines Beep-Warntons ausgegeben wird, dessen Frequenz bzw. Wiederholungsrate sich mit dem Abstand verändert. Insbesondere ist diese Wiederholfrequenz desto größer, je kleiner der gemessene Abstand ist. Es ist auch denkbar, dass diese akustische Warnung über das tragbare Kommunikationsgerät sich anders verhält als die bekannten Einparkhilfen, welche im Innenraum des Kraftfahrzeugs angeordnet sind. Zum Beispiel kann die Warnung über das tragbare Kommunikationsgerät vergleichsweise später erfolgen, um den Benutzer nicht unnötig mit akustischen Signalen zu belästigen. Mithilfe des akustischen und/oder des haptischen Informationssignals kann der Benutzer insgesamt besonders zuverlässig über den gemessenen Abstand informiert werden und kann somit innerhalb kürzester Zeit den automatischen Rangiervorgang gegebenenfalls unterbrechen, insbesondere ohne die auf dem Display des tragbaren Kommunikationsgeräts gegebenenfalls dargestellten Bilder der Fahrzeugumgebung kontinuierlich überwachen zu müssen. Dies kann auch beispielsweise über Sprachsignale erfolgen, so dass der gemessene Abstand durch das tragbare Kommunikationsgerät akustisch ausgesprochen wird.

Beispielsweise kann die Tonausgabe für die Bereiche vor dem Kraftfahrzeug, hinter dem Kraftfahrzeug und seitlich des Kraftfahrzeugs durch die Töne von unterschiedlichen Frequenzen generiert werden. Somit wird der Benutzer mit dem ausgegebenen Informationssignal darauf hingewiesen, in welchem der Umgebungsbereiche des Kraftfahrzeugs sich das Hindernis befindet.

Werden mehrere Hindernisse durch die Sensoreinrichtung erfasst, so kann vorgesehen sein, dass das tragbare Kommunikationsgerät das Informationssignal zu demjenigen Hindernis ausgibt, bezüglich dessen ein ermittelter Gefahrengrad am größten ist, insbesondere welches dem Kraftfahrzeug am nächsten liegt und/oder bezüglich dessen eine ermittelte Zeit bis zur Kollision am geringsten ist. Diese Ausführungsform erweist sich insbesondere bei solchen tragbaren Kommunikationsgeräten, welche über lediglich einen einzigen Lautsprecher verfügen, als vorteilhaft. Es wird dabei dasjenige Hindernis ausgewählt, welches die größte Gefahr für das Kraftfahrzeug darstellt. Der Gefahrengrad kann dabei unmittelbar mit dem direkten Abstand zwischen dem Kraftfahrzeug und dem Hindernis und/oder mit der so genannten Zeit bis zur Kollision (time to collision) oder aber der Entfernung bis zur Kollision (distance to collision) zusammenhängen. Bei der Entfernung bis zur Kollision handelt es sich dabei um die tatsächliche Weglänge, welche das Kraftfahrzeug unter Berücksichtigung des Lenkwinkels bzw. der voraussichtlichen Trajektorie zurücklegen muss, um das Hindernis zu erreichen bzw. mit dem Hindernis zu kollidieren.

In einer Ausführungsform ist vorgesehen, dass das tragbare Kommunikationsgerät ein Stereo-Lautsprechersystem mit zumindest einem ersten und einem zweiten Lautsprecher aufweist und die Sensoreinrichtung zu zumindest einem ersten und einem zweiten Umgebungsbereich des Kraftfahrzeugs jeweils Abstände zwischen dem Kraftfahrzeug einerseits und in den jeweiligen Umgebungsbereichen befindlichen Hindernissen andererseits erfasst. Dann kann das tragbare Kommunikationsgerät so eingerichtet sein, dass bei Vorhandensein eines Hindernisses in dem ersten Umgebungsbereich ein akustisches Informationssignal über den ersten Lautsprecher ausgegeben wird und bei Sich-Befinden eines Hindernisses in dem zweiten Umgebungsbereich ein akustisches Informationssignal über den zweiten Lautsprecher ausgegeben wird. Somit können durch das tragbare Kommunikationsgerät richtungsweisende akustische Informationssignale eingerichtet sein, dass bei Vorhandensein eines Hindernisses in dem ersten Umgebungsbereich ein akustisches Informationssignal über den ersten Lautsprecher ausgegeben wird und bei Sich-Befinden eines Hindernisses in dem zweiten Umgebungsbereich ein akustisches Informationssignal über den zweiten Lautsprecher ausgegeben wird. Somit können durch das tragbare Kommunikationsgerät richtungsweisende akustische Informationssignale ausgegeben werden, welche den Benutzer auch darüber informieren, in welchem Umgebungsbereich sich das erkannte Hindernis tatsächlich befindet. Die kann so aussehen, dass ein akustisches Informationssignal von links wahrgenommen wird, wenn sich ein Hindernis in einem Umgebungsbereich links neben dem Kraftfahrzeug befindet, während ein akustisches Informationssignal von der rechten Seite wahrgenommen wird, wenn ein Hindernis im Umgebungsbereich rechts neben dem Kraftfahrzeug detektiert wird. Somit kann der Benutzer auch zuverlässig über die Position des Hindernisses relativ zum Kraftfahrzeug informiert werden.

In einer Ausführungsform ist vorgesehen, dass bei - insbesondere kurz vor - dem Start des Rangiervorgangs - insbesondere auch vor jedem Bewegen des Kraftfahrzeugs aus dem Stillstand während des Rangiervorgangs - das akustische und/oder das haptische Informationssignal durch das tragbare Kommunikationsgerät ausgegeben wird. Dies stellt dann für den Benutzer eine Information über den bevorstehenden Start des Rangiervorgangs dar. Der Fahrer kann somit auf diese Aktion vorbereitet werden, ohne dass er durch den automatischen Start des Kraftfahrzeugs plötzlich überrascht wird. Dies erhöht auch den Bedienkomfort.

Es ist auch bevorzugt, wenn das tragbare Kommunikationsgerät bei Abbremsen des Kraftfahrzeugs - nämlich insbesondere gleichzeitig mit Abbremsen oder aber kurz vor dem Abbremsen - das akustische und/oder das haptische Informationssignal ausgibt, um den Fahrer über das Abbremsen des Kraftfahrzeugs zu informieren. Entscheidet das System beispielsweise, das Kraftfahrzeug - sei es wegen eines unerwarteten Hindernisses, sei es am Ende eines Einparkzuges, sei es auch bei Erreichen einer Endposition in der Parklücke - abzubremsen, so kann das akustische Informationssignal und/oder das haptische Vibrationssignal bzw. ein Vibrationsimpuls generiert werden. An dieser Stelle erweist sich insbesondere ein haptischer Vibrationsimpuls als vorteilhaft. Dabei kann der Vibrationsimpuls, welcher beim Abbremsen des Kraftfahrzeugs ausgegeben wird, unterschiedlich von einem Vibrationsimpuls sein, der beim Bewegen des Kraftfahrzeugs aus dem Stillstand erzeugt wird. Allgemein gesagt kann das Informationssignal (akustisch und/oder haptisch) beim Start des Kraftfahrzeugs ein von dem beim Abbremsen des Kraftfahrzeugs ausgegebenen Informationssignal unterschiedliches Informationssignal sein. Es ist auch möglich, dass bei einem dieser Vorgänge (Start oder Abbremsen) ein akustisches Informationssignal ausgegeben wird, während bei dem anderen Vorgang ein haptisches Informationssignal generiert wird. Somit wird der Benutzer eindeutig auf den jeweiligen Vorgang hingewiesen, und es werden Verwechslungen ausgeschlossen. Wird ein haptisches und/oder akustisches Informationssignal beim Abbremsen des Kraftfahrzeugs ausgegeben, so hat dies den Vorteil, dass somit dem Fahrer die Gewissheit gegeben wird, dass ein Hindernis, auf welches sich das Kraftfahrzeug zu bewegt, von dem System erfasst wurde und das System auch rechtzeitig darauf reagieren kann.

Es erweist sich als vorteilhaft, wenn das akustische Informationssignal ein Sprachsignal mit Informationen über den Rangiervorgang umfasst. Somit kann das akustische Informationssignal auch durch eine sprechende Stimme gestaltet werden, durch welche der Benutzer ausdrücklich auf die speziellen Gefahren - etwa aufgrund von Hindernissen - hingewiesen wird, und zwar in der Weise, wie sie bereits bei Navigationssystemen mit Sprachsignalen bekannt ist. Dies erhöht den Komfort beim Überwachen des automatisierten Rangiervorgangs auf ein Maximum, und der Benutzer wird über alle relevanten Gefahren informiert, ohne dass er einen Blick auf das tragbare Kommunikationsgerät richten muss. Beispielsweise kann durch das Sprachsignal eine Information über die restliche Entfernung und/oder über die Restzeit bis zum Erreichen einer Endposition in der Parklücke ausgegeben werden. Ergänzend oder alternativ kann auch der verbliebene Abstand zu einem Hindernis und/oder die Zeit bis zur Kollision in Form von Sprachsignalen ausgegeben werden.

Vorzugsweise ist die Logik betreffend das akustische und/oder haptische Informationssignal in der fahrzeugseitigen Steuereinrichtung implementiert, während das tragbare Kommunikationsgerät bevorzugt lediglich Steuerbefehle von der Steuereinrichtung empfängt, ein entsprechendes akustisches und/oder haptisches Informationssignal auszugeben. Bei dieser Ausführungsform erfolgt die Festlegung des durch das tragbare Kommunikationsgerät auszugebenden akustischen und/oder haptischen Informationssignals durch die fahrzeugseitige Steuereinrichtung selbst, welche dann an das tragbare Kommunikationsgerät einen Steuerbefehl überträgt, durch welchen das tragbare Kommunikationsgerät dazu angesteuert wird, das festgelegte akustische und/oder haptische Informationssignal auszugeben. Somit wird der Rechenaufwand in dem tragbaren Kommunikationsgerät auf ein Minimum reduziert, sodass auch tragbare Kommunikationsgeräte mit einer geringen Rechenleistung bzw. mit relativ wenig Speicherplatz eingesetzt werden können. Der meiste Rechenaufwand wird nämlich auf die fahrzeugseitige Steuereinrichtung verlagert, welche in der Regel ohnehin über vergleichsweise große Rechenleistung verfügt.

Das Rangiersystem kann auch zumindest eine im oder am Kraftfahrzeug angeordnete Kamera aufweisen, und es können von der Kamera aufgenommene Bilddaten und/oder daraus durch eine Bildverarbeitung gewonnene Bilddaten an das tragbare Kommunikationsgerät übertragen werden. Das tragbare Kommunikationsgerät kann dann auf seinem Display - nämlich insbesondere auf einem berührungssensitiven Display - Echtzeitbilder anzeigen, die auf den empfangenen Bilddaten der zumindest einen Kamera beruhen. Auf diese Weise wird die Bedienperson beim Überwachen des automatischen Rangiervorgangs dahingehend unterstützt, dass sie auf dem Display des tragbaren bzw. mobilen Kommunikationsgeräts Echtzeitbilder zumindest eines Umgebungsbereiches des Kraftfahrzeugs angezeigt bekommt. Der Benutzer kann somit die im Umgebungsbereich des Kraftfahrzeugs befindlichen Objekte bzw. Hindernisse sehen und den automatischen Rangiervorgang gegebenenfalls dann unterbrechen, wenn eine Kollision bevorsteht. Insbesondere weist das Rangiersystem eine Vielzahl von Kameras - zumindest zwei Kameras - auf, die im und/oder am Kraftfahrzeug angebracht sind und insbesondere den gesamten Umgebungsbereich bzw. die gesamte Umgebung um das Kraftfahrzeug herum erfassen.

Unter einer Kamera wird vorliegend insbesondere eine Video-Kamera bzw. eine Bilderfassungseinrichtung verstanden, die Licht in dem durch den Menschen wahrnehmbaren bzw. sichtbaren Spektralbereich detektieren und so Bilder aufzeichnen kann, nämlich insbesondere eine zeitliche Sequenz von Bildern, bevorzugt eine Vielzahl von Bildern pro Sekunde.

Unter Echtzeitbildern wird vorliegend also eine zeitliche Sequenz von nacheinander erfassten Bildern verstanden, welche in Echtzeit bzw. "online" auf dem Display des tragbaren Kommunikationsgeräts angezeigt werden. Dies bedeutet, dass auf dem Display ein Live-Video zumindest eines Umgebungsbereichs des Kraftfahrzeugs angezeigt wird, der mittels der zumindest einen Kamera erfasst und abgebildet wird.

Auch hier ist die gesamte Logik bzw. die gesamte Bildverarbeitung vorzugsweise in der fahrzeugseitigen Steuereinrichtung implementiert, und die Funktion des tragbaren Kommunikationsgeräts beschränkt sich bevorzugt darauf, die bereitgestellten Bilddaten zu empfangen und auf dem Display anzuzeigen.

Bevorzugt werden auf dem Display des tragbaren Kommunikationsgeräts Echtzeitbilder angezeigt, die eine Draufsicht auf zumindest einen Bereich des Kraftfahrzeugs - insbesondere das gesamte Kraftfahrzeug - sowie auf einen Umgebungsbereich - insbesondere die gesamte Umgebung um das Kraftfahrzeug herum - darstellen. Eine derartige Draufsicht aus einer Vogelperspektive wird auch als "Bird-Eye-View" bezeichnet. Dies kann beispielsweise so aussehen, dass die fahrzeugseitige Steuereinrichtung aus den Bilddaten der Kameras ein derartiges Bild berechnet und dieses Bild an das tragbare Kommunikationsgerät übermittelt. Alternativ kann jedoch auch vorgesehen sein, dass die Bilddaten ohne eine Verarbeitung an das tragbare Kommunikationsgerät übertragen werden und das tragbare Kommunikationsgerät dann ein Bild erzeugt, welches die Draufsicht zeigt. Wie bereits ausgeführt, erweist es sich jedoch als vorteilhaft, wenn diese Logik in der fahrzeugseitigen Steuereinrichtung implementiert ist. Anhand einer derartigen Draufsicht kann die Bedienperson die in der Umgebung des Kraftfahrzeugs vorhandenen Hindernisse noch besser erkennen und die Abstände zwischen dem Kraftfahrzeug einerseits und den Hindernissen andererseits besser einschätzen.

Das tragbare Kommunikationsgerät kann dazu ausgelegt sein, die auf dem Display angezeigten Echtzeitbilder zu skalieren und/oder zu verschieben. Diese Skalierung und/oder Verschiebung kann automatisch in Abhängigkeit davon erfolgen, an welcher Stelle der Benutzer das Display berührt, nämlich beispielsweise unten oder oben. Wird das Display beispielsweise oben berührt, so bedeutet dies, dass ein oberer Bereich der Bilder verdeckt werden würde. In diesem Falle kann das tragbare Kommunikationsgerät die dargestellten Bilder derart nach unten verschieben, dass in dem noch unverdeckten Bereich des Displays das gesamte Kraftfahrzeug oder aber der jeweils relevante Umgebungsbereich dargestellt wird. Es ist auch möglich, durch entsprechende Benutzereingaben - etwa durch Überstreichen des berührungssensitiven Displays - eine benutzerdefinierte Skalierung und/oder Verschiebung der Bilder vorzunehmen.

Es kann auch vorgesehen sein, dass derjenige Umgebungsbereich vergrößert auf dem Display dargestellt wird bzw. in denjenigen Umgebungsbereich eingezoomt wird, in welchem sich ein Hindernis befindet, mit welchem eine Kollision droht. Ergänzend oder alternativ kann dieser Bereich auf dem Display auch mit einer vorbestimmten Farbgebung - etwa Rot - überschattet werden. Somit wird der Benutzer auf die relevanten Bereiche hingewiesen. eines automatisierten Rangiervorgangs des Kraftfahrzeugs freizugeben und/oder zu unterbrechen. Das tragbare Kommunikationsgerät weist einen Lautsprecher und/oder eine Haptikeinrichtung auf, und die Steuereinheit kann in Abhängigkeit von drahtlos empfangenen Nachrichten bezüglich des Rangiervorgangs des Kraftfahrzeugs ein akustisches Informationssignal mit Informationen über den Rangiervorgang mittels des Lautsprechers und/oder ein haptisches Informationssignal mit Informationen über den Rangiervorgang mittels der Haptikeinrichtung ausgeben. Das tragbare Kommunikationsgerät ist dazu ausgelegt, für zumindest zwei unterschiedlichen Umgebungsbereiche des Kraftfahrzeugs jeweils verschiedene akustische Informationssignale auszugeben, wobei die zumindest zwei unterschiedlichen Umgebungsbereiche des Kraftfahrzeugs jeweils Abstände zwischen dem Kraftfahrzeug und in den jeweiligen Umgebungsbereichen befindlichen Hindernissen darstellen und über eine fahrzeugseitige Sensoreinrichtung erfassbar sind.

Ein erfindungsgemäßes Verfahren ist zum automatisierten Rangieren eines Kraftfahrzeugs ausgelegt. Mittels einer fahrzeugseitigen Steuereinrichtung werden Steuersignale an eine Antriebs- und/oder Lenkvorrichtung des Kraftfahrzeugs abgegeben und hierdurch ein Rangiervorgang des Kraftfahrzeugs selbsttätig durchgeführt. Ein tragbares Kommunikationsgerät kommuniziert drahtlos mit der fahrzeugseitigen Steuereinrichtung und kann hierbei den Rangiervorgang in Abhängigkeit von einer Eingabe eines Benutzers an einer Bedieneinrichtung des tragbaren Kommunikationsgeräts freigeben und/oder unterbrechen. Im Rahmen der drahtlosen Kommunikation sendet die fahrzeugseitige Steuereinrichtung Nachrichten bezüglich des Rangiervorgangs an das tragbare Kommunikationsgerät, wobei das tragbare Kommunikationsgerät in Abhängigkeit von den empfangenen Nachrichten ein akustisches Informationssignal mit Informationen über den Rangiervorgang mittels eines Lautsprechers und/oder ein haptisches Informationssignal mit Informationen über den Rangiervorgang mittels einer Haptikeinrichtung ausgibt.

Zur Erfindung gehört auch ein Computerprogramm, welches beim Ablauf auf einem tragbaren Kommunikationsgerät zum Durchführen des erfindungsgemäßen Verfahrens ausgelegt ist bzw. das Durchführen des erfindungsgemäßen Verfahrens ermöglicht.

Die mit Bezug auf das erfindungsgemäße Rangiersystem vorgestellten bevorzugten Ausführungsformen und deren Vorteile gelten entsprechend für das erfindungsgemäße Kraftfahrzeug, das erfindungsgemäße tragbare Kommunikationsgerät, das erfindungsgemäße Verfahren sowie für das erfindungsgemäße Computerprogramm.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert. An dieser Stelle sei ausdrücklich betont, dass das nachfolgende Ausführungsbeispiel lediglich eine beispielhafte Ausführungsform der Erfindung darstellt und die Erfindung somit nicht auf dieses Ausführungsbeispiel beschränkt ist.

Die einzige Figur veranschaulicht in schematischer Darstellung ein Kraftfahrzeug mit einem Rangiersystem gemäß einer Ausführungsform der Erfindung.

In der Figur ist in schematischer Darstellung ein als Personenkraftwagen ausgebildetes Kraftfahrzeug 1 dargestellt, welches ein Rangiersystem 2 aufweist, das zum Durchführen eines autonomen bzw. vollständig automatischen Parkvorgangs des Kraftfahrzeugs 1 ausgebildet ist. Das Rangiersystem 2 stellt somit im Ausführungsbeispiel ein Parkhilfesystem dar. Zum Rangiersystem 2 gehört einerseits eine fahrzeugseitige Steuereinrichtung 3 sowie andererseits auch ein tragbares Kommunikationsgerät 4. Die Steuereinrichtung 3 kann beispielsweise einen Mikroprozessor bzw. digitalen Signalprozessor sowie eine Sende- und Empfangseinheit aufweisen, über welche die Steuereinrichtung 3 des Kraftfahrzeugs 1 mit dem tragbaren Kommunikationsgerät 4 kommunizieren kann, und zwar drahtlos.

Die Steuereinrichtung 3 ist mit einer in der Figur lediglich schematisch dargestellten Antriebs- und Lenkvorrichtung 5 des Kraftfahrzeugs 1 elektrisch gekoppelt. Die Antriebs- und Lenkvorrichtung 5 umfasst alle zum Durchführen eines Parkvorgangs erforderlichen Einrichtungen des Kraftfahrzeugs 1, wie insbesondere einen Antriebsstrang, eine Bremsanlage und eine Lenkeinrichtung. Die Steuereinrichtung 3 kann dabei Steuersignale S an die Antriebs- und Lenkvorrichtung 5 abgeben, die das Durchführen de autonomen Parkvorgangs bewirken.

Das Rangiersystem 2 umfasst außerdem Sensoren 6, welche insgesamt eine Sensoreinrichtung bilden und an dem Kraftfahrzeug 1 verteilt angeordnet sind. Und zwar sind die Sensoren 6 so angeordnet, dass Parklücken problemlos erkannt und erfasst werden können. Beispielsweise können eine Vielzahl von Sensoren 6 an dem vorderen Stoßfänger des Kraftfahrzeugs 1 angeordnet sein, und eine Vielzahl von Sensoren 6 kann auch an dem hinteren Stoßfänger angebracht sein. Die Anordnung sowie die Anzahl der Sensoren 6 sind in der Figur lediglich beispielhaft dargestellt und können je nach Ausführungsform unterschiedlich sein. Die Sensoren 6 sind insbesondere Abstandssensoren, nämlich bevorzugt Ultraschallsensoren und/oder optische Sensoren und/oder Radargeräte.

Außer den Sensoren 6 umfasst das Rangiersystem 2 auch eine Mehrzahl von Kameras 7, die an dem Kraftfahrzeug 1 verteilt angeordnet sind und im Ausführungsbeispiel die gesamte Umgebung um das Kraftfahrzeug herum erfassen. Dabei kann eine Kamera 7 im vorderen Bereich des Kraftfahrzeugs 1, etwa an der Windschutzscheibe oder aber am vorderen Stoßfänger, angeordnet sein; eine Kamera 7 kann im Heckbereich angeordnet sein, insbesondere an einem hinteren Stoßfänger oder aber an einer Heckklappe; es können auch jeweilige Kameras 7 in die Außenspiegel integriert sein.

Sowohl die Sensoren 6 als auch die Kameras 7 sind mit der Steuereinrichtung 3 elektrisch gekoppelt. Die durch die Kameras 7 aufgenommene Bilddaten sowie die Sensordaten der Sensoren 6 werden an die Steuereinrichtung 3 übermittelt.

Wie bereits ausgeführt, gehört zum Rangiersystem 2 auch das tragbare Kommunikationsgerät 4, welches im Ausführungsbeispiel ein Smartphone ist. Das tragbare Kommunikationsgerät 4 beinhaltet in bekannter Weise eine nicht näher dargestellte Steuereinheit, nämlich einen digitalen Signalprozessor, und weist ein berührungssensitives Display 8 auf, welches einerseits die Funktion einer Bedieneinrichtung und andererseits auch die Funktion einer optischen Anzeigeeinrichtung hat. Das tragbare Kommunikationsgerät 4 umfasst auch eine nicht dargestellte Sende- und Empfangseinrichtung, die zum Senden und zum Empfangen von Signalen ausgebildet ist. Somit kann das tragbare Kommunikationsgerät 4 mit der Steuereinrichtung 3 des Kraftfahrzeugs 1 drahtlos und bidirektional kommunizieren. Diese Datenübertragung erfolgt vorzugsweise gemäß dem WLAN-Kommunikationsstandard (WiFi) oder einem anderen geeigneten Kommunikationsstandard, insbesondere einem Standard mit einer vergleichsweise geringen Reichweite.

Wie bereits ausgeführt, kann die Steuereinrichtung 3 einen autonomen bzw. vollständig automatischen Parkvorgang des Kraftfahrzeugs 1 durchführen. Nach Erkennen einer Parklücke mithilfe der Sensoren 6 berechnet die Steuereinrichtung 3 eine Parkbahn, die das Kraftfahrzeug 1 zum Erreichen einer Endposition in der erfassten Parklücke befahren muss. Nach Berechnen dieser Parkbahn kann dann der tatsächliche Parkvorgang gestartet werden. Diesen Rangiervorgang kann ein Fahrer des Kraftfahrzeugs 1 einleiten, nämlich mithilfe des tragbaren Kommunikationsgeräts 4. Das Kommunikationsgerät 4 kann nämlich einen Befehl 9 an die Steuereinrichtung 3 übermitteln, aufgrund dessen der automatische Parkvorgang eingeleitet wird. Der Fahrer kann also neben dem Kraftfahrzeug 1 stehen und diesen automatischen Vorgang von außerhalb des Kraftfahrzeugs 1 beobachten. Der Fahrer hat auch jederzeit die Möglichkeit, den automatischen Parkvorgang zu unterbrechen. Dazu muss er lediglich eine vorbestimmte Berührungsfläche des Displays 8 berühren oder aber freigeben bzw. loslassen.

Es ist vorgesehen, dass die Steuereinrichtung 3 an das tragbare Kommunikationsgerät 4 Nachrichten 10 mit Informationen über den Rangiervorgang übermittelt. Auf der Grundlage dieser Nachrichten 10 wird dann ein Lautsprecher 11 des tragbaren Kommunikationsgeräts 4 und/oder eine Haptikeinrichtung 12 des Kommunikationsgeräts 4 angesteuert. Mithilfe des Lautsprechers 11 und/oder der Haptikeinrichtung 12 wird der Fahrer also über den Rangiervorgang informiert.

Mittels des Lautsprechers 11 kann also ein akustisches Informationssignal 13 ausgegeben werden, um den Fahrer über die Einzelheiten des Rangiervorgangs auf akustischem Wege zu informieren. Entsprechend kann mittels der Haptikeinrichtung 12 - diese kann einen Vibrator aufweisen - ein haptisches Informationssignal 14 ausgegeben werden, welches ein Vibrationssignal ist, durch welches das tragbare Kommunikationsgerät 4 in eine Schwingung gebracht wird. Somit kann der Fahrer auf haptischem Wege (wahrnehmbar durch Berührung) ebenfalls über die Einzelheiten des Rangiervorgangs informiert werden. Vorliegend ist die Ausführungsform bevorzugt, bei welcher die Informationssignale 13, 14 bereits durch die Steuereinrichtung 3 des Kraftfahrzeugs 1 festgelegt werden und mit den Nachrichten 10 (Daten) Steuerbefehle an das tragbare Kommunikationsgerät 4 übertragen werden, mit denen das Kommunikationsgerät 4 zum Ausgeben des jeweiligen Informationssignals 13 bzw. 14 angesteuert wird, und zwar derart, wie dies bereits durch die Steuereinrichtung 3 festgelegt worden ist. Alternativ kann jedoch auch vorgesehen sein, dass in den Nachrichten 10 lediglich allgemeine Informationen (etwa Abstände) an das tragbare Kommunikationsgerät 4 übertragen werden, und das tragbare Kommunikationsgerät 4 dann das jeweilige Informationssignal 13 bzw. 14 selbst festlegt.

Durch die Sensoreinrichtung einschließlich der Sensoren 6 können in der Umgebung des Kraftfahrzeugs 1 befindliche Hindernisse erfasst werden, und die jeweiligen Abstände zwischen dem Kraftfahrzeug 1 und den Hindernissen können gemessen werden. Jeder Sensor 6 weist dabei einen eigenen Erfassungsbereich auf, sodass in unterschiedlichen Umgebungsbereichen des Kraftfahrzeugs 1 befindliche Hindernisse separat erfasst und die Abstände auch separat gemessen werden können. Es kann beispielsweise gleichzeitig ein Abstand d1 zwischen dem Kraftfahrzeug 1 und einem Hindernis 15, das sich in einem linken Umgebungsbereich 16 des Kraftfahrzeugs 1 befindet, sowie andererseits auch ein Abstand d2 zwischen dem Kraftfahrzeug 1 und einem anderen Hindernis 17 erfasst werden, das sich in einem rechten Umgebungsbereich 18 des Kraftfahrzeugs 1 befindet. Nun kann durch das tragbare Kommunikationsgerät 4 ein akustisches Informationssignal 13 in der Gestalt eines Beep-Tons ausgegeben werden, mittels welchem der Fahrer über die gemessenen Abstände informiert wird. An dieser Stelle können unterschiedlichste Ausführungsformen vorgesehen sein: Weist das tragbare Kommunikationsgerät 4 einen einzigen Lautsprecher 11 auf, so kann das Informationssignal 13 zu demjenigen Hindernis 15, 17 ausgegeben werden, bezüglich dessen ein berechneter Gefahrengrad am größten ist. Als Grundlage für den Gefahrengrad kann dabei der direkte gemessene Abstand d1, d2 oder aber die so genannte Zeit bis zur Kollision (time to collision) dienen, welche grundsätzlich auch mit der so genannten Entfernung bis zur Kollision zusammenhängt. Diese berücksichtigt im Gegensatz zum direkten Abstand d1, d2 auch die voraussichtliche Trajektorie des Kraftfahrzeugs 1, welche anhand des aktuellen Lenkwinkels bestimmt werden kann. Dabei gilt, dass je größer die Zeit bis zur Kollision ist, desto geringer der Gefahrengrad ist. Bei Vorhandensein eines einzigen Lautsprechers 11 wird somit das Informationssignal 13 zu einem bestimmten Zeitpunkt ausschließlich für ein einziges der Hindernisse 15, 17 ausgegeben, und zwar für dasjenige Hindernis 15, 17, welches sich dem Fahrzeug 1 näher befindet und/oder bei welchem die Zeit bis zur Kollision am geringsten ist.

Alternativ kann jedoch auch vorgesehen sein, dass das tragbare Kommunikationsgerät 4 einen weiteren Lautsprecher 19 aufweist, welcher zusammen mit dem Lautsprecher 11 ein Stereo-Lautsprechersystem bildet. In diesem Falle können jeweilige Informationssignale 13, 20 ausgegeben werden, welche jeweils ein unterschiedliches Hindernis 15, 17 betreffen. Und zwar kann mit dem linken Lautsprecher 19 ein akustisches Informationssignal 20 ausgegeben werden, welches über den Abstand d1 zum Hindernis 15 informiert, das sich im linken Umgebungsbereich 16 befindet. Demgegenüber kann mittels des rechten Lautsprechers 11 ein akustisches Informationssignal 13 ausgegeben werden, mittels welchem der Fahrer über den Abstand d2 zum rechten Hindernis 17 informiert wird. Welcher der beiden Lautsprecher 19, 11 jeweils angesteuert wird, kann davon abhängig gemacht werden, wo sich das jeweilige Hindernis 15, 17 bezüglich einer Fahrzeuglängsachse (Längsmittelachse) befindet. Befindet sich das Hindernis 15, 17 überwiegend auf der rechten Seite dieser Fahrzeuglängsachse, so wird der rechte Lautsprecher 11 angesteuert. Und umgekehrt wird der linke Lautsprecher 19 dann angesteuert, wenn ein Hindernis 15, 17 auf der linken Seite dieser Längsachse detektiert wird.

Bezüglich der Informationssignale 13, 20 können auch unterschiedliche Ausführungsformen vorgesehen sein, welche auch miteinander kombiniert werden können. So können die Informationssignale 13, 20 einen akustischen Beep-Ton umfassen und somit über schneller bis zum Dauerton werdende Warntöne die jeweilige Distanz signalisieren. Die Wiederholfrequenz bzw. Wiederholrate dieser Warntöne hängt dabei - ähnlich wie bei fahrzeuginternen Einparkhilfen - von dem gemessenen Abstand d1, d2 ab. Es kann auch vorgesehen sein, dass ergänzend oder alternativ zu den richtungsweisenden Informationssignalen 13, 20 jeweils eine andere Signalfrequenz (Tonhöhe) in Abhängigkeit von der Position des Hindernisses 15, 17 relativ zum Kraftfahrzeug 1 - beispielsweise relativ zu der genannten Mittellängsachse - verwendet wird. Somit kann der Fahrer auch bei lediglich einem Lautsprecher 11 oder 19 über die Position des Hindernisses 15, 17 informiert werden.

Ergänzend oder alternativ können die Informationssignale 13 und/oder 20 auch Sprachsignale beinhalten, mittels welcher der Fahrer über die genauen Abstände d1, d2 mit Sprache informiert wird. Solche menschlichen Sprachsignale können beispielsweise so gestaltet werden, wie dies bereits bei Navigationssystemen bekannt ist. Hierbei kann der Fahrer mit den Sprachsignalen über die Abstände d1, d2 zu den Hindernissen 15, 17 und/oder auch über die restliche Entfernung bis zur Endposition in der Parklücke und/oder über die restliche Zeit zum Erreichen der Parklücke informiert werden.

Das haptische Informationssignal 14 kann beispielsweise dazu verwendet werden, um dem Fahrer den Start des Rangiervorgangs und/oder ein Abbremsen des Kraftfahrzeugs 1 zu signalisieren. Es kann auch jede Bewegung des Kraftfahrzeugs 1 aus einem Stillstand während des Rangiervorgangs mit einem solchen haptischen Informationssignal 14 signalisiert werden. Wird beispielsweise auch das Kraftfahrzeug 1 aufgrund eines Hindernisses 15, 17 während des Rangiervorgangs angehalten, kann dies entsprechend auch vorab mit dem haptischen Informationssignal 14 signalisiert werden. Auch das Erreichen der Endposition in der Parklücke kann mit einem solchen Informationssignal 14 signalisiert werden. Somit wird der Fahrer auf alle relevanten Aktionen während des Rangiervorgangs wirkungsvoll hingewiesen.

Aus den Bilddaten der Kameras 7 kann die Steuereinrichtung 3 auch das so genannte "Bird-Eye-View" erzeugen, also Echtzeitbilder, welche das Kraftfahrzeug 1 und seine Umgebung aus einer Vogelperspektive zeigen. Diese Draufsichtbilder können dann auch an das tragbare Kommunikationsgerät 4 übertragen und dort auf dem Display 8 angezeigt werden. Das tragbare Kommunikationsgerät 4 kann dann die auf dem Display 8 angezeigten Echtzeitbilder skalieren bzw. zoomen und/oder verschieben. Dies kann auch automatisch in Abhängigkeit davon erfolgen, an welcher Stelle der Fahrer das tragbare Kommunikationsgerät 4 anfasst bzw. berührt. Wird beispielsweise ein Bereich des Displays 8 - etwa der obere Bereich - durch die Hand des Fahrers verdeckt, so kann das Echtzeitbild in denjenigen Bereich (beispielsweise den unteren Bereich) des Displays 8 verschoben werden, welcher durch den Fahrer nicht verdeckt ist. Unabhängig von der Stelle, an welcher der Fahrer das Kommunikationsgerät 4 hält, kann das vollständige relevante Echtzeitbild dargestellt werden. Es kann auch in denjenigen Umgebungsbereich eingezoomt werden, welcher momentan besonders relevant ist. Dies kann derjenige Umgebungsbereich sein, in welchem sich das Hindernis 15, 17 mit dem größten Gefahrengrad befindet. Ergänzend oder alternativ kann dieser relevante Umgebungsbereich auf dem Display 8 mit einer vorbestimmten Farbgebung - etwa Rot - überschattet werden. Es ist auch möglich, die Skalierung und/oder die Verschiebung der Echtzeitbilder auf dem Display 8 benutzerspezifisch zu gestalten, nämlich durch eine geeignete Eingabe an dem berührungssensitiven Display 8. Beispielsweise erfolgt die Verschiebung der Bilder durch einfaches Überstreichen des Displays 8 in die gewünschte Richtung, während das Skalieren des Bildes durch einfaches Überstreichen des Displays 8 mit zwei Fingern in entgegen gesetzte Richtungen erfolgen kann.

## Patentansprüche

1. Rangiersystem (2) zum automatisierten Rangieren eines Kraftfahrzeugs (1), mit einer fahrzeugseitigen Steuereinrichtung (3), die dazu ausgelegt ist, Steuersignale (S) an eine Antriebs- und/oder Lenkvorrichtung (5) des Kraftfahrzeugs (1) abzugeben und hierdurch einen Rangiervorgang des Kraftfahrzeugs (1) selbsttätig durchzuführen, und mit einem durch einen Benutzer bedienbaren tragbaren Kommunikationsgerät (4), welches dazu ausgelegt ist, mit der fahrzeugseitigen Steuereinrichtung (3) drahtlos zu kommunizieren und hierbei den Rangiervorgang in Abhängigkeit von einer Eingabe des Benutzers an einer Bedieneinrichtung (8) des tragbaren Kommunikationsgeräts (4) freizugeben und/oder zu unterbrechen, wobei die fahrzeugseitige Steuereinrichtung (3) dazu ausgelegt ist, im Rahmen der drahtlosen Kommunikation Nachrichten (10) bezüglich des Rangiervorgangs an das tragbare Kommunikationsgerät (4) zu übertragen, wobei das tragbare Kommunikationsgerät (4) dazu ausgelegt ist, in Abhängigkeit von den empfangenen Nachrichten (10) mittels einer Einrichtung (11, 12, 19) ein Informationssignal (13, 14, 20) mit Informationen über den Rangiervorgang auszugeben, wobei das Rangiersystem (2) eine fahrzeugseitige Sensoreinrichtung (6) zum Erfassen eines Abstands (d1, d2) zwischen dem Kraftfahrzeug (1) und einem in einem Umgebungsbereich (16, 18) des Kraftfahrzeugs (1) befindlichen Hindernis (15, 17) umfasst und die fahrzeugseitige Steuereinrichtung (3) dazu ausgelegt ist, die Nachrichten (10) für das tragbare Kommunikationsgerät (4) auf der Grundlage des erfassten Abstands (d1, d2) zu erzeugen,
wobei die Einrichtung einen Lautsprecher (11, 19) zur Ausgabe eines akustischen Informationssignals (13, 14, 20) umfasst, und das von dem tragbaren Kommunikationsgerät (4) ausgegebene akustische Informationssignal (13, 14, 20) ein in seiner Wiederholfrequenz, von dem Abstand (d1, d2) abhängiges Signal ist, **dadurch gekennzeichnet, dass**
die Sensoreinrichtung (6) dazu ausgebildet ist, zu zumindest zwei unterschiedlichen Umgebungsbereichen (16, 18) des Kraftfahrzeugs (1) jeweilige Abstände (d1, d2) zwischen dem Kraftfahrzeug (1) und in den jeweiligen Umgebungsbereichen (16, 18) befindlichen Hindernissen (15, 17) zu erfassen, und das tragbare Kommunikationsgerät (4) dazu ausgelegt ist, für die zumindest zwei unterschiedlichen Umgebungsbereiche (16, 18) des Kraftfahrzeugs (1) jeweils verschiedene akustische Informationssignale (13, 20) auszugeben.

2. Rangiersystem (2) nach Anspruch 1,
**dadurch gekennzeichnet, dass**
die Sensoreinrichtung (6) dazu ausgebildet ist, zu zumindest zwei unterschiedlichen Umgebungsbereichen (16, 18) des Kraftfahrzeugs (1) jeweilige Abstände (d1, d2) zwischen dem Kraftfahrzeug (1) und in den jeweiligen Umgebungsbereichen (16, 18) befindlichen Hindernissen (15, 17) zu erfassen, und das tragbare Kommunikationsgerät (4) dazu ausgelegt ist, das Informationssignal (13, 14, 20) zu demjenigen Hindernis (15, 17) auszugeben, welches für das Kraftfahrzeug (1) einen größten Gefahrengrad darstellt, insbesondere welches dem Kraftfahrzeug (1) am nächsten liegt und/oder bezüglich dessen eine Zeit bis zur Kollision am geringsten ist.

3. Rangiersystem (2) nach Anspruch 1,
**dadurch gekennzeichnet, dass**
das tragbare Kommunikationsgerät (4) ein Stereo-Lautsprechersystem mit zumindest einem ersten und einem zweiten Lautsprecher (11, 19) aufweist und die Sensoreinrichtung (6) dazu ausgebildet ist, zu zumindest einem ersten und einem zweiten Umgebungsbereich (16, 18) des Kraftfahrzeugs (1) jeweilige Abstände (d1, d2) zwischen dem Kraftfahrzeug (1) und in den jeweiligen Umgebungsbereichen (16, 18) befindlichen Hindernissen (15, 17) zu erfassen, wobei das tragbare Kommunikationsgerät (4) dazu ausgelegt ist, bei Vorhandensein eines Hindernisses (15, 17) in dem ersten Umgebungsbereich (16, 18) ein akustisches Informationssignal (13, 14, 20) über den ersten Lautsprecher (11, 19) auszugeben und bei Vorhandensein eines Hindernisses (15, 17) in dem zweiten Umgebungsbereich (16, 18) ein akustisches Informationssignal (13, 14, 20) über den zweiten Lautsprecher (11, 19) auszugeben.

4. Rangiersystem (2) nach einem der vorhergehenden Ansprüche,
**dadurch gekennzeichnet, dass**
das tragbare Kommunikationsgerät (4) dazu ausgelegt ist, beim Start des Rangiervorgangs das akustische und/oder das haptische Informationssignal (13, 14, 20) als Information über den bevorstehenden Start des Rangiervorgangs auszugeben.

5. Rangiersystem (2) nach einem der vorhergehenden Ansprüche,
**dadurch gekennzeichnet, dass**
das tragbare Kommunikationsgerät (4) dazu ausgelegt ist, bei Abbremsen des Kraftfahrzeugs (1) das akustische und/oder das haptische Informationssignal (13, 14, 20) als Information über das Abbremsen auszugeben.

6. Rangiersystem (2) nach einem der vorhergehenden Ansprüche,
**dadurch gekennzeichnet, dass**
das akustische Informationssignal (13, 20) ein Sprachsignal mit Informationen über den Rangiervorgang umfasst.

7. Rangiersystem (2) nach einem der vorhergehenden Ansprüche,
**dadurch gekennzeichnet, dass**
die fahrzeugseitige Steuereinrichtung (3) dazu ausgelegt ist, das durch das tragbare Kommunikationsgerät (4) auszugebende akustische und/oder haptische Informationssignal (13, 14, 20) selbst festzulegen und an das tragbare Kommunikationsgerät (4) einen Steuerbefehl als Nachrichten (10) zu übertragen, um das tragbare Kommunikationsgerät (4) zum Ausgeben des festgelegten akustischen und/oder haptischen Informationssignals (13, 14, 20) anzusteuern.

8. Rangiersystem (2) nach einem der vorhergehenden Ansprüche,
**dadurch gekennzeichnet, dass**
das tragbare Kommunikationsgerät (4) als Mobiltelefon ausgebildet ist.

9. Kraftfahrzeug (1) mit einem Rangiersystem (2) nach einem der vorhergehenden Ansprüche.

10. Tragbares Kommunikationsgerät (4) mit einer Bedieneinrichtung (8) und mit einer Steuereinheit, die dazu ausgelegt ist, eine Eingabe, die ein Benutzer an der Bedieneinrichtung (8) vornimmt, zu empfangen und aufgrund dieser Eingabe einen Befehl an ein Kraftfahrzeug (1) drahtlos zu übertragen, um das Durchführen eines automatisierten Rangiervorgangs des Kraftfahrzeugs (1) freizugeben und/oder zu unterbrechen, wobei die Steuereinheit dazu ausgelegt ist, in Abhängigkeit von drahtlos empfangenen Nachrichten (10) bezüglich des Rangiervorgangs des Kraftfahrzeugs (1) mittels einer Einrichtung (11, 12, 19) ein Informationssignal (13, 14, 20) mit Informationen über den Rangiervorgang auszugeben,
wobei die Einrichtung einen Lautsprecher (11, 19) zur Ausgabe eines akustischen Informationssignals (13, 14, 20) umfasst, und das von dem tragbaren Kommunikationsgerät (4) ausgegebene akustische und/oder haptische Informationssignal (13, 14, 20) ein in seiner Wiederholfrequenz, von dem Abstand (d1, d2) abhängiges Signal ist,
**dadurch gekennzeichnet, dass**
das tragbare Kommunikationsgerät (4) dazu ausgelegt ist, für zumindest zwei unterschiedlichen Umgebungsbereiche (16, 18) des Kraftfahrzeugs (1) jeweils verschiedene akustische Informationssignale (13, 20) auszugeben, wobei die zumindest zwei unterschiedlichen Umgebungsbereiche (16, 18) des Kraftfahrzeugs (1) jeweils Abstände (d1, d2) zwischen dem Kraftfahrzeug (1) und in den jeweiligen Umgebungsbereichen (16, 18) befindlichen Hindernissen (15, 17) darstellen und über eine fahrzeugseitige Sensoreinrichtung (6) erfassbar sind.

11. Computerprogrammprodukt, insbesondere Datenträger, wobei das Computerprogrammprodukt ein Computerprogramm umfasst, das so programmiert ist, dass, wenn es von einer Steuereinheit eines tragbaren Kommunikationsgeräts dazu veranlasst, eine Eingabe, die ein Benutzer an einer Bedieneinrichtung (8) des Kommunikationsgeräts (4) vornimmt, zu empfangen und aufgrund dieser Eingabe einen Befehl an ein Kraftfahrzeug (1) drahtlos zu übertragen, um das Durchführen eines automatisierten Rangiervorgangs des Kraftfahrzeugs (1) freizugeben und/oder zu unterbrechen, wobei das Computerprogramm dazu programmiert ist, die Steuereinheit zu veranlassen, in Abhängigkeit von drahtlos empfangenen Nachrichten (10) bezüglich des Rangiervorgangs des Kraftfahrzeugs (1) mittels einer Einrichtung (11, 12, 19) ein Informationssignal (13, 14, 20) mit Informationen über den Rangiervorgang auszugeben,
wobei das tragbare Kommunikationsgerät (4) dazu veranlasst wird, über einen Lautsprecher (11, 19) ein akustisches Informationssignals (13, 14, 20) auszugeben, das ein in seiner Wiederholfrequenz, von dem Abstand (d1, d2) abhängiges Signal ist, **dadurch gekennzeichnet, dass**
das tragbare Kommunikationsgerät (4) dazu ausgelegt ist, für zumindest zwei unterschiedlichen Umgebungsbereiche (16, 18) des Kraftfahrzeugs (1) jeweils verschiedene akustische Informationssignale (13, 20) auszugeben, wobei die zumindest zwei unterschiedlichen Umgebungsbereichen (16, 18) des Kraftfahrzeugs (1) jeweils Abstände (d1, d2) zwischen dem Kraftfahrzeug (1) und in den jeweiligen Umgebungsbereichen (16, 18) befindlichen Hindernissen (15, 17) sind und durch eine fahrzeugseitige Sensoreinrichtung (6) erfassbar sind.

12. Verfahren zum automatisierten Rangieren eines Kraftfahrzeugs (1), bei welchem eine fahrzeugseitige Steuereinrichtung (3) Steuersignale (S) an eine Antriebs- und/oder Lenkvorrichtung (5) des Kraftfahrzeugs (1) abgibt und hierdurch einen Rangiervorgang des Kraftfahrzeugs (1) selbsttätig durchführt, und bei welchem ein tragbares Kommunikationsgerät (4) mit der fahrzeugseitigen Steuereinrichtung (3) drahtlos kommuniziert und hierbei den Rangiervorgang in Abhängigkeit von einer Eingabe eines Benutzers an einer Bedieneinrichtung (8) des tragbaren Kommunikationsgeräts (4) freigibt und/oder unterbricht, wobei im Rahmen der drahtlosen Kommunikation die fahrzeugseitige Steuereinrichtung (3) Nachrichten (10) bezüglich des Rangiervorgangs an das tragbare Kommunikationsgerät (4) überträgt, wobei das tragbare Kommunikationsgerät (4) in Abhängigkeit von den empfangenen Nachrichten (10) ein Informationssignal (13, 14, 20) mit Informationen über den Rangiervorgang mittels einer Einrichtung (11, 12, 19) des tragbaren Kommunikationsgeräts (4) ausgibt,
wobei das Kommunikationsgerät (4) über einen Lautsprecher (11, 19) ein akustisches Informationssignals (13, 14, 20) ausgibt und das von dem tragbaren Kommunikationsgerät (4) ausgegebene akustische Informationssignal (13, 14, 20) ein in seiner Wiederholfrequenz, von dem Abstand (d1, d2) abhängiges Signal ist, **dadurch gekennzeichnet, dass**
eine fahrzeugseitige Sensoreinrichtung (6) dazu ausgebildet ist, zu zumindest zwei unterschiedlichen Umgebungsbereichen (16, 18) des Kraftfahrzeugs (1) jeweilige Abstände (d1, d2) zwischen dem Kraftfahrzeug (1) und in den jeweiligen Umgebungsbereichen (16, 18) befindlichen Hindernissen (15, 17) zu erfassen, und das tragbare Kommunikationsgerät (4) dazu ausgelegt ist, für die zumindest zwei unterschiedlichen Umgebungsbereiche (16, 18) des Kraftfahrzeugs (1) jeweils verschiedene akustische Informationssignale (13, 20) auszugeben.

## Claims

1. Manoeuvring system (2) for the automated manoeuvring of a motor vehicle (1), including an on-board control device (3) which is designed to provide control signals (S) to a drive device and/or steering device (5) of the motor vehicle (1) and thereby to carry out a manoeuvring operation of the motor vehicle (1) automatically, and including a portable communication device (4) which is operable by a user, which is designed to communicate wirelessly with the on-board control device (3) and thereby to enable and/or interrupt the manoeuvring operation as a function of an input by the user at an operating device (8) of the portable communication device (4), wherein the on-board control device (3) is designed to transmit messages (10) to the portable communication device (4) with respect to the manoeuvring operation as part of the wireless communication, wherein the portable communication device (4) is designed to output an information signal (13, 14, 20) by means of a device (11, 12, 19) including information about the manoeuvring operation, as a function of the received messages (10), wherein the manoeuvring system (2) includes an on-board sensor device (6) for detecting a distance (d1, d2) between the motor vehicle (1) and an obstacle (15, 17) located in a surrounding area (16, 18) of the motor vehicle (1), and the on-board control device (3) is designed to generate the messages (10) for the portable communication device (4) based on the detected distance (d1, d2),
wherein the device includes a loudspeaker (11, 19) to output an acoustic information signal (13, 14, 20), and the acoustic information signal (13, 14, 20) which is output by the portable communication device (4) is a signal which is a function of the distance (d1, d2) with respect to its repetition frequency,
**characterized in that**
the sensor device (6) is designed to detect respective distances (d1, d2) between the motor vehicle (1) and obstacles (15, 17) located in the respective surrounding areas (16, 18), for at least two different surrounding areas (16, 18) of the motor vehicle (1), and the portable communication device (4) is designed to output respectively different acoustic information signals (13, 20) for the at least two different surrounding areas (16, 18) of the motor vehicle (1).

2. Manoeuvring system (2) according to Claim 1, **characterized in that**
the sensor device (6) is designed to detect respective distances (d1, d2) between the motor vehicle (1) and obstacles (15, 17) located in the respective surrounding areas (16, 18), for at least two different surrounding areas (16, 18) of the motor vehicle (1), and the portable communication device (4) is designed to output the information signal (13, 14, 20) for that obstacle (15, 17) which constitutes a greatest degree of danger for the motor vehicle (1), in particular which is closest to the motor vehicle (1) and/or with respect to which a time until collision is the shortest.

3. Manoeuvring system (2) according to Claim 1, **characterized in that**
the portable communication device (4) includes a stereo loudspeaker system including at least a first and a second loudspeaker (11, 19), and the sensor device (6) is designed to detect respective distances (d1, d2) between the motor vehicle (1) and obstacles (15, 17) located in the respective surrounding areas (16, 18), for at least a first and a second surrounding area (16, 18) of the motor vehicle (1), wherein the portable communication device (4) is designed to output an acoustic information signal (13, 14, 20) via the first loudspeaker (11, 19) if an obstacle (15, 17) is present in the first surrounding area (16, 18), and to output an acoustic information signal (13, 14, 20) via the second loudspeaker (11, 19) if an obstacle (15, 17) is present in the second surrounding area (16, 18).

4. Manoeuvring system (2) according to one of the preceding claims, **characterized in that**
the portable communication device (4) is designed to output the acoustic and/or the haptic information signal (13, 14, 20) at the start of the manoeuvring operation, as information about the imminent start of the manoeuvring operation.

5. Manoeuvring system (2) according to one of the preceding claims, **characterized in that**
the portable communication device (4) is designed to output the acoustic and/or the haptic information signal (13, 14, 20) when braking the motor vehicle (1), as information about the braking.

6. Manoeuvring system (2) according to one of the preceding claims, **characterized in that**
the acoustic information signal (13, 20) includes a speech signal including information about the manoeuvring operation.

7. Manoeuvring system (2) according to one of the preceding claims, **characterized in that**
the on-board control device (3) is designed to determine, itself, the acoustic and/or haptic information signal (13, 14, 20) which is to be output by the portable communication device (4), and to transmit a control command as messages (10) to the portable communication device (4), in order to trigger the portable communication device (4) to output the determined acoustic and/or haptic information signal (13, 14, 20).

8. Manoeuvring system (2) according to one of the preceding claims, **characterized in that**
the portable communication device (4) is designed as a mobile telephone.

9. Motor vehicle (1) including a manoeuvring system (2) according to one of the preceding claims.

10. Portable communication device (4) including an operating device (8) and including a control unit which is designed to receive an input which a user carries out at the operating device (8), and to transmit a command to a motor vehicle (1) wirelessly based on this input, in order to enable and/or interrupt the carrying out of an automated manoeuvring operation of the motor vehicle (1), wherein the control unit is designed to output an information signal (13, 14, 20) with information about the manoeuvring operation as a function of wirelessly received messages (10) regarding the manoeuvring operation of the motor vehicle (1) by means of a device (11, 12, 19), wherein the device comprises a loudspeaker (11, 19) for outputting an acoustic information signal (13, 14, 20), and the acoustic and/or haptic information signal (13, 14, 20) which is output by the portable communication device (4) is a signal which is a function of the distance (d1, d2) with respect to its repetition frequency, **characterized in that** the portable communication device (4) is designed to output respectively different acoustic information signals (13, 20) for at least two different surrounding areas (16, 18) of the motor vehicle (1), wherein the at least two different surrounding areas (16, 18) of the motor vehicle (1) represent in each case distances (d1, d2) between the motor vehicle (1) and obstacles (15, 17) located in the respective surrounding areas (16, 18) and can be detected by means of a sensor device (6) of the vehicle.

11. Computer program product, in particular data carrier, wherein the computer program product comprises a computer program which is programmed such that, when triggered by a control unit of a portable communication device, said computer program receives an input which a user carries out at an operating device (8) of the communication device (4) and transmits a command to a motor vehicle (1) wirelessly based on this input, in order to enable and/or interrupt the carrying out of an automated manoeuvring operation of the motor vehicle (1), wherein the computer program is programmed to trigger the control unit to output an information signal (13, 14, 20) with information about the manoeuvring operation by means of a device (11, 12, 19) as a function of wirelessly received messages (10) regarding the manoeuvring operation of the motor vehicle (1),
wherein the portable communication device (4) is triggered to output an acoustic information signal (13, 14, 20) by means of a loudspeaker (11, 19) which is a function of the distance (d1, d2) with respect to its repetition frequency,
**characterized in that**
the portable communication device (4) is designed to output respectively different acoustic information signals (13, 20) for at least two different surrounding areas (16, 18) of the motor vehicle (1), wherein the at least two different surrounding areas (16, 18) of the motor vehicle (1) represent in each case distances (d1, d2) between the motor vehicle (1) and obstacles (15, 17) located in the respective surrounding areas (16, 18) and can be detected by means of a sensor device (6) of the vehicle.

12. Method for the automated manoeuvring of a motor vehicle (1), in which an on-board control device (3) provides control signals (S) to a drive device and/or steering device (5) of the motor vehicle (1) and thereby carries out a manoeuvring operation of the motor vehicle (1) automatically, and in which a portable communication device (4) communicates wirelessly with the on-board control device (3) and thereby enables and/or interrupts the manoeuvring operation as a function of an input by a user to an operating device (8) of the portable communication device (4), wherein, as part of the wireless communication, the on-board control device (3) transmits messages (10) to the portable communication device (4) with respect to the manoeuvring operation, wherein the portable communication device (4) outputs an information signal (13, 14, 20) including information about the manoeuvring operation by means of a device (11, 12, 19) of the portable communication device (4), as a function of the received messages (10),
wherein the communication device (4) outputs an acoustic information signal (13, 14, 20) by means of a loudspeaker (11, 19), and the acoustic information signal (13, 14, 20) which is output by the portable communication device (4) is a signal which is a function of the distance (d1, d2) with respect to its repetition frequency,
**characterized in that**
a sensor device (6) of the vehicle is, with regard to at least two different surrouning areas (16, 18) of the motor vehicle (1), designed to detect respective distances (d1, d2) between the motor vehicle (1) and obstacles (15, 17) located in the respective surrounding areas (16, 18), and the portable communication device (4) is designed to output respectively different acoustic information signals (13, 20) for the at least two different surrounding areas (16, 18) of the motor vehicle (1).

## Revendications

1. Système de stationnement (2) pour stationner automatiquement un véhicule automobile (1), présentant sur le véhicule un dispositif de commande (3) conçu pour délivrer des signaux de commande (S) à un ensemble (5) d'entraînement et/ou de braquage du véhicule automobile (1) et ainsi réaliser de manière autonome une manoeuvre de stationnement du véhicule automobile (1), et présentant un appareil portable de communication (4) apte à être actionné par un utilisateur et conçu pour communiquer sans fil avec le dispositif de commande (3) prévu sur le véhicule pour ainsi lancer et/ou interrompre la manoeuvre de stationnement en fonction d'une introduction par l'utilisateur sur un dispositif de commande (8) de l'appareil portable de communication (4),
le dispositif de commande (3) côté véhicule étant conçu pour, dans le cadre de la communication sans fil, transférer des messages (10) concernant la manoeuvre de stationnement à l'appareil portable de communication (4),
l'appareil portable de communication (4) étant conçu pour, en fonction des messages (10) reçus, délivrer au moyen d'un dispositif (11, 12, 19) un signal d'information (13, 14, 20) contenant des informations sur la manoeuvre de stationnement,
le système de stationnement (2) comprenant sur le véhicule un dispositif (6) de capteurs qui détecte la distance (d1, d2) entre le véhicule automobile (1) et un obstacle (15, 17) situé dans un environnement (16, 18) du véhicule automobile (1) et le dispositif de commande (3) situé côté véhicule étant conçu pour former les messages (10) pour l'appareil portable de communication (4) sur la base de la distance (d1, d2) qui a été saisie,
le dispositif comportant un haut-parleur (11, 19) qui délivre un signal acoustique d'information (13, 14, 20) et le signal acoustique d'information (13, 14, 20) délivré par l'appareil portable de communication (4) étant un signal dont la fréquence de répétition dépend de la distance (d1, d2),
**caractérisé en ce que**
le dispositif de capteurs (6) est conçu pour saisir dans au moins deux environnements différents (16, 18) du véhicule automobile (1) les distances (d1, d2) entre le véhicule automobile (1) et des obstacles (15, 17) situés dans chaque environnement (16, 18) et
**en ce que** l'appareil portable de communication (4) est conçu pour délivrer des signaux acoustiques d'information (13, 20) différents pour les deux ou plusieurs environnements différents (16, 18) du véhicule automobile (1).

2. Système de stationnement (2) selon la revendication 1, **caractérisé en ce que** le dispositif de capteurs (6) est conçu pour saisir dans au moins deux environnements différents (16, 18) du véhicule automobile (1) les distances (d1, d2) entre le véhicule automobile (1) et des obstacles (15, 17) situés dans chaque environnement (16, 18) et **en ce que** l'appareil portable de communication (4) est conçu pour délivrer le signal d'information (13, 14, 20) concernant l'obstacle (15, 17) qui constitue le plus grand danger pour le véhicule automobile (1) et en particulier qui est situé le plus près du véhicule automobile (1) et/ou pour lequel la durée qui s'écoulerait jusqu'à une collision est la plus courte.

3. Système de stationnement (2) selon la revendication 1, **caractérisé en ce que** l'appareil portable de communication (4) présente un système de haut-parleurs stéréo présentant au moins un premier et un deuxième haut-parleur (11, 19), **en ce que** le dispositif de capteurs (6) est conçu pour saisir dans au moins deux environnements différents (16, 18) du véhicule automobile (1) les distances (d1, d2) entre le véhicule automobile (1) et des obstacles (15, 17) situés dans chaque environnement (16, 18) et **en ce que** l'appareil portable de communication (4) est conçu pour, en cas de présence d'un obstacle (15, 17) dans le premier environnement (16, 18), délivrer un signal acoustique d'information (13, 14, 20) par le premier haut-parleur (11, 19) et pour, lors de la présence d'un obstacle (15, 17) dans le deuxième environnement (16, 18), délivrer un signal acoustique d'information (13, 14, 20) par le deuxième haut-parleur (11, 19).

4. Système de stationnement (2) selon l'une des revendications précédentes, **caractérisé en ce que** l'appareil portable de communication (4) est conçu pour, au début de la manoeuvre de stationnement, délivrer le signal acoustique et/ou le signal tactile d'information (13, 14, 20) en tant qu'information concernant le démarrage qui vient de se produire de la manoeuvre de stationnement.

5. Système de stationnement (2) selon l'une des revendications précédentes, **caractérisé en ce que** l'appareil portable de communication (4) est conçu pour, en cas de freinage du véhicule automobile (1), délivrer le signal acoustique et/ou le signal tactile d'information (13, 14, 20) en tant qu'information concernant le freinage.

6. Système de stationnement (2) selon l'une des revendications précédentes, **caractérisé en ce que** le signal acoustique d'information (13, 20) comporte un signal vocal contenant des informations concernant la manoeuvre de stationnement.

7. Système de stationnement (2) selon l'une des revendications précédentes, **caractérisé en ce que** le dispositif de commande (3) côté véhicule est conçu pour définir lui-même le signal acoustique et/ou le signal tactile d'information (13, 14, 20) qui doit être délivré par l'appareil portable de communication (4) et transmettre à l'appareil portable de communication (4) un ordre sous la forme de messages (10) pour commander l'appareil portable de communication (4) à délivrer le signal acoustique et/ou le signal tactile d'information (13, 14, 20) qui ont été définis.

8. Système de stationnement (2) selon l'une des revendications précédentes, **caractérisé en ce que** l'appareil portable de communication (4) est configuré comme téléphone mobile.

9. Véhicule automobile (1) doté d'un système de stationnement (2) selon l'une des revendications précédentes.

10. Appareil portable de communication (4) présentant un dispositif d'actionnement (8) et une unité de commande conçue pour recevoir une donnée introduite par l'utilisateur dans le dispositif d'actionnement (8) et, sur la base de cette commande, transférer sans fil un ordre au véhicule automobile (1) en vue de lancer et/ou d'interrompre l'exécution d'une manoeuvre automatique de stationnement du véhicule automobile (1),
le dispositif de commande étant conçu pour, en fonction de messages (10) reçus sans fil concernant la manoeuvre de stationnement du véhicule automobile (1), délivrer au moyen d'un dispositif (11, 12, 19) un signal d'information (13, 14, 20) qui contient des informations sur la manoeuvre de stationnement,
le dispositif comportant un haut-parleur (11, 19) qui délivre un signal acoustique d'information (13, 14, 20) et le signal acoustique et/ou tactile d'information (13, 14, 20) délivré par l'appareil portable de communication (4) étant un signal dont la fréquence de répétition dépend de la distance (d1, d2),
**caractérisé en ce que**
l'appareil portable de communication (4) est conçu pour délivrer des signaux acoustiques d'information (13, 20) différents pour les deux ou plusieurs environnements différents (16, 18) du véhicule automobile (1), les deux ou plusieurs environnements différents (16, 18) du véhicule automobile (1) représentant chacun des distances (d1, d2) entre le véhicule automobile (1) et des obstacles (15, 17) situés dans chaque environnement (16, 18) et pouvant être saisis par un dispositif de capteurs (6) prévu sur le véhicule.

11. Produit de programme informatique, en particulier support de données,
le produit de programme informatique comportant un programme informatique programmé de telle sorte que lorsqu'il est mis en oeuvre par une unité de commande d'un appareil portable de communication, est amené à recevoir une donnée qu'un utilisateur introduit sur un dispositif d'activation (8) de l'appareil de communication (4) et, sur base de cette donnée, transférer sans fil au véhicule automobile (1) une commande qui libère et/ou interrompt l'exécution d'une manoeuvre automatique de stationnement du véhicule automobile (1),
le programme informatique étant programmé pour, en fonction de messages (10) reçus sans fil concernant la manoeuvre de stationnement du véhicule automobile (1), amener l'unité de commande à délivrer au moyen d'un dispositif (11, 12, 19) un signal d'information (13, 14, 20) qui contient des informations sur la manoeuvre de stationnement,
l'appareil portable de communication (4) étant amené à émettre par l'intermédiaire d'un haut-parleur (11, 19) un signal acoustique d'information (13, 14, 20) qui est un signal dont la fréquence de répétition dépend de la distance (d1, d2),
**caractérisé en ce que**
l'appareil portable de communication (4) est conçu pour délivrer des signaux acoustiques d'information (13, 20) différents pour les deux ou plusieurs environnements différents (16, 18) du véhicule automobile (1), les deux ou plusieurs environnements différents (16, 18) du véhicule automobile (1) représentant chacun des distances (d1, d2) entre le véhicule automobile (1) et des obstacles (15, 17) situés dans chaque environnement (16, 18) et pouvant être saisis par un dispositif de capteurs (6) prévu sur le véhicule.

12. Procédé de stationnement automatique d'un véhicule automobile (1) dans lequel un dispositif de commande (3) prévu sur le véhicule délivre des signaux de commande (S) à un ensemble (5) d'entraînement et/ou de braquage du véhicule automobile (1) et réalise ainsi de manière autonome une manoeuvre de stationnement du véhicule automobile (1), et dans lequel un appareil portable de communication (4) apte à être actionné par un utilisateur communique sans fil avec le dispositif de commande (3) prévu sur le véhicule pour ainsi lancer et/ou interrompre la manoeuvre de stationnement en fonction d'une introduction par l'utilisateur sur un dispositif de commande (8) de l'appareil portable de communication (4),
le dispositif de commande (3) côté véhicule transférant dans le cadre de la communication sans fil des messages (10) concernant la manoeuvre de stationnement à l'appareil portable de communication (4),
l'appareil portable de communication (4) délivrant au moyen d'un dispositif (11, 12, 19) de l'appareil portable de communication (4) un signal d'information (13, 14, 20) contenant des informations sur la manoeuvre de stationnement en fonction des messages (10) reçus,
l'appareil portable de communication (4) délivrant par un haut-parleur (11, 19) un signal acoustique d'information (13, 14, 20) et le signal acoustique d'information (13, 14, 20) délivré par l'appareil portable de communication (4) étant un signal dont la fréquence de répétition dépend de la distance (d1, d2), **caractérisé en ce que**
le dispositif de capteurs (6) est conçu pour saisir dans au moins deux environnements différents (16, 18) du véhicule automobile (1) les distances (d1, d2) entre le véhicule automobile (1) et des obstacles (15, 17) situés dans chaque environnement (16, 18) et
**en ce que** l'appareil portable de communication (4) est conçu pour délivrer des signaux acoustiques d'information (13, 20) différents pour les deux ou plusieurs environnements différents (16, 18) du véhicule automobile (1).
